# EUROPEAN PATENT APPLICATION

(11) **EP 4 841 431 A1**
(43) Date of publication of application: **18.11.2026**
(21) Application number: 24919760.9
(22) Date of filing: 25.09.2024
(51) Int. Cl.: G06F 8/65

(54) **METHOD FOR UPDATING MICRO-SERVICE INSTANCES AND RELATED DEVICE**

(30) Priority: 26.01.2024 CN 202410114585; 20.03.2024 CN 202410323293
(71) Applicant: Huawei Cloud Computing Technologies Co., Ltd., Gui'an New District, Guizhou 550025 (CN)
(72) Inventor: CUI, Xiulong, Guiyang, Guizhou 550025 (CN); ZHONG, Yuanhui, Guiyang, Guizhou 550025 (CN); SUN, Baoming, Guiyang, Guizhou 550025 (CN)
(74) Representative: Huawei European IPR
(86) International application number: PCT/CN2024/121040
(87) International publication number: WO 2025/156680

(57) **Abstract**

Embodiments of this application disclose a microservice instance update method, applied to a microservice instance update system. In the system, a plurality of plug-ins in a plug-in center provide capabilities for updating microservice instances of a plurality of workload types in a plurality of running environments (for example, cloud native, virtualization, and serverless). Therefore, after a to-be-updated instance is determined, a target plug-in adapted to a current running environment can be dynamically determined based on a workload type of the to-be-updated instance, to access the corresponding running environment, and update the to-be-updated instance in a microservice cluster. It can be learned that, the method can be used to efficiently update microservice instances in different running environments. Therefore, update efficiency of the microservice cluster is improved, requirements of a plurality of application scenarios can be met, universality is high, and maintenance and management are convenient.

## Description

This application claims priorities to Chinese Patent Application No. 202410114585.3, filed with the China National Intellectual Property Administration on January 26, 2024 and entitled "DATA PROCESSING METHOD AND RELATED DEVICE", and to Chinese Patent Application No. 202410323293.0, filed with the China National Intellectual Property Administration on March 20, 2024 and entitled "MICROSERVICE INSTANCE UPDATE METHOD AND RELATED DEVICE", both of which are incorporated herein by reference in their entireties.

### TECHNICAL FIELD

This application relates to the field of microservice technologies, and specifically, to a microservice instance update method and a related device.

### BACKGROUND

With the vigorous development of cloud technologies, cloud application scenarios with various runtime modalities such as virtual machines, cloud native architectures, and serverless architectures have emerged. However, updating of a large quantity of applications faces great challenges in diversified application scenarios.

Currently, a conventional approach for microservice update involves manually selecting microservice instances within a microservice cluster for update.

However, current running environments of the microservice cluster are increasingly diversified, for example, there are a plurality of running environments such as physical machines, virtual machines, cloud native architectures, and serverless architectures. Therefore, the conventional approach for microservice update has poor versatility, and is difficult to adapt to update requirements within such diversified running environments, resulting in low efficiency in updating microservice instances.

### SUMMARY

Embodiments of this application provide a microservice instance update method, to update a microservice instance within a microservice cluster in a plurality of running environments. Therefore, update efficiency of the microservice cluster is high, and requirements of a plurality of application scenarios can be met. This application further provides a corresponding apparatus and device, a computer-readable storage medium, a computer program product, and the like.

A first aspect of this application provides a microservice instance update method, applied to a microservice instance update system, where the system is disposed in at least one data center, and the system includes a communication interface, a plug-in center, and an update component. The communication interface obtains an update request, where the update request indicates to update a microservice cluster, and the microservice cluster includes a plurality of microservice instances. The update component determines a to-be-updated instance from the plurality of microservice instances in the microservice cluster based on the update request. The plug-in center determines, based on a workload type of the to-be-updated instance, a target plug-in from a plurality of plug-ins included in the plug-in center, where different plug-ins in the plurality of plug-ins are configured to provide interfaces for updating microservice instances of different workload types, and the target plug-in is configured to provide an interface for updating a microservice instance of the workload type of the to-be-updated instance. The update component invokes the target plug-in. The target plug-in accesses a running environment of the to-be-updated instance, to update the to-be-updated instance.

In the first aspect, the plurality of plug-ins provide capabilities for updating microservice instances of different workload types in a plurality of running environments (for example, cloud native, virtualization, and serverless). Therefore, after the to-be-updated instance is determined, the target plug-in adapted to a current running environment can be dynamically determined based on the workload type of the to-be-updated instance, to access the corresponding running environment, and update the to-be-updated instance in the microservice cluster. It can be learned that, in the first aspect, the method can be used to efficiently update microservice instances in different running environments. Therefore, update efficiency of the microservice cluster is improved, requirements of a plurality of application scenarios can be met, universality is high, and maintenance and management are convenient.

In a possible implementation of the first aspect, the workload type includes a container, a virtual machine, and/or a function.

In this possible implementation, a running form of the microservice instance is referred to as a workload.

In a possible implementation of the first aspect, that the update component determines the to-be-updated instance from the plurality of microservice instances in the microservice cluster based on the update request includes: The update component obtains status information of each of the plurality of microservice instances; and the update component determines the to-be-updated instance from the plurality of microservice instances based on the status information of each microservice instance.

In this possible implementation, the status information of the microservice instance indicates an attribute status, a running status, and/or the like of the microservice instance. Alternatively, the status information may directly indicate whether the microservice instance is the to-be-updated instance. For example, the microservice instance marks, in a form of a label or the like based on information such as a running status of the microservice instance, whether the microservice instance is the to-be-updated instance.

For example, the status information of the microservice instance may include one or more of the following information:
information indicating whether the microservice instance is a primary instance or a secondary instance, information indicating a region to which the microservice instance belongs, information indicating a running status of the microservice instance, or information that indicates whether a microservice instance is updatable or non-updatable and that is determined based on whether the microservice instance is a primary/secondary instance, a busy/idle instance, or the like.

In a possible implementation of the first aspect, the plurality of microservice instances in the microservice cluster include a microservice instance serving as a primary instance and a microservice instance serving as a secondary instance, and the status information includes information indicating whether the microservice instance is a primary instance or a secondary instance; and that the update component determines the to-be-updated instance from the plurality of microservice instances based on the status information of each microservice instance includes: The update component determines, from the plurality of microservice instances, a plurality of to-be-updated instances and an update order of each to-be-updated instance, where in the plurality of to-be-updated instances, an update order of the microservice instance serving as the secondary instance takes precedence over an update order of the microservice instance serving as the primary instance.

When there is a primary/secondary difference between microservice instances in the microservice cluster, interruption of the primary instance directly reduces a service level agreement (service level agreement, SLA) level. In addition, during running, if the primary instance is frequently switched, performance of the microservice cluster is severely degraded.

Based on this, in this possible implementation, the status information of the microservice instance can be used to record whether the microservice instance is serving as the primary instance or the secondary instance, so that the to-be-updated instances in the microservice instances and the update order of each to-be-updated instance are properly determined, thereby avoiding frequent switching of the primary instance in a microservice instance update process.

For example, the plurality of to-be-updated instances and the update order of each to-be-updated instance can be determined from the plurality of microservice instances, where in the plurality of to-be-updated instances, the update order of the to-be-updated instance whose status information indicates the secondary instance takes precedence over the update order of the to-be-updated instance whose status information indicates the primary instance. It can be learned that, in this possible implementation, when the plurality of to-be-updated instances include the microservice instance serving as the primary instance and the microservice instance serving as the secondary instance, the microservice instance serving as the secondary instance can be updated prior to the microservice instance serving as the primary instance, so that the primary instance is switched once in a process of updating all the to-be-updated instances, thereby avoiding a case in which performance of the microservice cluster is severely degraded due to frequent switching of the primary instance.

In a possible implementation of the first aspect, the status information includes information indicating a running status of the microservice instance, and the running status indicates whether the microservice instance is running; and that the update component determines the to-be-updated instance from the plurality of microservice instances based on the status information of each microservice instance includes: The update component determines, from the plurality of microservice instances, a microservice instance whose running status is an idle state as the to-be-updated instance.

The microservice cluster includes a running microservice instance and an idle microservice instance, and interruption costs of the two microservice instances are greatly different. For example, a service loss is usually caused when a microservice instance that runs a task for a long time is updated in a task execution process.

Based on this, in this possible implementation, the running status of each microservice instance can be recorded, where the running status can indicate a task execution status of the microservice instance, for example, may indicate whether the microservice instance is running, and may further indicate a resource occupation status of the running microservice instance, and the like. A microservice instance in a state in which no service is currently lost or a service loss is small is determined as the to-be-updated instance. In other words, a microservice instance whose running status is the idle state is determined as the to-be-updated instance. This reduces a service loss in the microservice instance update process and ensures good service execution effect.

In a possible implementation of the first aspect, the status information includes information indicating a region to which the microservice instance belongs, and the plurality of microservice instances belong to a plurality of regions; and that the update component determines the to-be-updated instance from the plurality of microservice instances based on the status information of each microservice instance includes: The update component determines a plurality of to-be-updated instances from the plurality of microservice instances, where the plurality of to-be-updated instances belong to at least two regions, and a quantity of to-be-updated instances included in each region is less than a threshold.

The microservice cluster includes microservice instances that are deployed in a distributed manner based on a disaster recovery requirement. In other words, different microservice instances may be deployed in different regions (regions). If microservice instances in a same region are updated in a centralized manner, a quantity of microservice instances that can provide services in the region is small, and a disaster recovery capability of the region is reduced.

Based on this, in this possible implementation, the plurality of to-be-updated instances can be determined, the plurality of to-be-updated instances are not concentrated in a same region, and the quantity of the to-be-updated instances included in each region is less than the threshold (the threshold can be determined based on the disaster recovery requirement), so that the to-be-updated instances can be scattered in a plurality of regions and are not concentrated in the same region, thereby ensuring that the microservice instances in the plurality of regions can be updated synchronously, and ensuring a disaster recovery capability of each region.

A second aspect of this application provides a microservice instance update system. The system has a function of implementing the method according to any one of the first aspect or the possible implementations of the first aspect. The function may be implemented by hardware, or may be implemented by hardware executing corresponding software. The hardware or the software includes one or more modules corresponding to the foregoing function, for example, a communication interface, an update component, and a plug-in center.

A third aspect of this application provides a compute device cluster. The compute device cluster includes at least one compute device. The at least one compute device includes a processor and a memory. The memory of the at least one compute device stores computer-executable instructions that can be run on the processor. When the computer-executable instructions are executed by the processor, the processor performs the method according to any one of the first aspect or the possible implementations of the first aspect.

A fourth aspect of this application provides a computer-readable storage medium storing one or more computer-executable instructions. When the computer-executable instructions are executed by a processor, the processor performs the method according to any one of the first aspect or the possible implementations of the first aspect.

A fifth aspect of this application provides a computer program product storing one or more computer-executable instructions. When the computer-executable instructions are executed by a processor, the processor performs the method according to any one of the first aspect or the possible implementations of the first aspect.

A sixth aspect of this application provides a chip system. The chip system includes a processor, configured to support the processor in implementing a function according to any one of the first aspect or the possible implementations of the first aspect. In a possible design, the chip system may further include a memory. The memory is configured to store necessary program instructions and data. The chip system may include a chip, or may include a chip and another discrete component.

For technical effect brought by any one of the second aspect to the sixth aspect or the possible implementations of the second aspect to the sixth aspect, refer to the technical effect brought by the first aspect or the related possible implementations of the first aspect. Details are not described herein again.

### BRIEF DESCRIPTION OF DRAWINGS

FIG. 1 is a diagram of an example of a cloud management platform and an infrastructure according to an embodiment of this application;
FIG. 2 is a diagram of an example of processing phases according to an embodiment of this application;
FIG. 3 is a diagram of an example of a framework structure according to an embodiment of this application;
FIG. 4 is a diagram of an embodiment of a microservice instance update method according to an embodiment of this application;
FIG. 5a is a schematic flowchart of an example of a cloud native scenario according to an embodiment of this application;
FIG. 5b is a schematic flowchart of another example of a cloud native scenario according to an embodiment of this application;
FIG. 6a is a schematic flowchart of an example of an application scenario with reference to third-party software according to an embodiment of this application;
FIG. 6b is a schematic flowchart of another example of an application scenario with third-party software according to an embodiment of this application;
FIG. 7a is a schematic flowchart of an example of a virtualization cluster scenario according to an embodiment of this application;
FIG. 7b is a schematic flowchart of another example of a virtualization cluster scenario according to an embodiment of this application;
FIG. 8 is a diagram of an example of a microservice instance update system according to an embodiment of this application;
FIG. 9 is a diagram of a structure of a compute device according to an embodiment of this application;
FIG. 10 is a diagram of a structure of a compute device cluster according to an embodiment of this application; and
FIG. 11 is a diagram of a structure of a compute device cluster according to an embodiment of this application.

### DESCRIPTION OF EMBODIMENTS

The following describes embodiments of this application with reference to accompanying drawings in embodiments of this application. Terms used in implementations of this application are merely used to explain specific embodiments of this application, but are not intended to limit this application.

A person of ordinary skill in the art may learn that, with development of technologies and emergence of new scenarios, the technical solutions provided in embodiments of this application are also applicable to similar technical problems.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items" or a similar expression thereof means any combination of these items, including any combination of singular items or plural items. In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, system, product, or device.

First, concepts in embodiments of this application are described.

### (1) Microservice

A microservice is a software architecture style based on small building blocks (small building blocks) that each have a single responsibility and function, and integrates the small building blocks into a large and complex application in a modular manner. Each building block uses a language-independent (language-independent/language agnostic) application programming interface (application programming interface, API) set for communication.

When various services are developed in a form of a microservice, one service can be completed through a plurality of microservices. For example, when a user shops on a shopping website, the user browses a commodity interface and then initiates a purchase request. A purchase system generates an order and initiates a payment request. In this case, the purchase system first invokes a commodity browsing service, the commodity browsing service invokes an order service, and the order service invokes a payment service. The commodity browsing service, the order service, and the payment service are different microservices.

### (2) Microservice instance

An instantiated microservice is referred to as a microservice instance. For example, the microservice instance may run on at least one of a terminal device, a server, a server cluster, a virtual machine (virtual machine, VM), a container (container), or the like.

### (3) Microservice cluster

A microservice cluster is a set of a group of microservice instances with the same service responsibilities. In an architecture of the microservice cluster, the group of microservice instances with the same service responsibilities in the microservice cluster provide one microservice externally. In an ideal case, statuses of the microservice instances in the microservice cluster are consistent. However, in an actual scenario, the microservice instances in the microservice cluster usually have differences in an instantaneous state. For example, there is a primary/secondary difference, or the running statuses are different.

### (4) Workload

A running form of a microservice instance is referred to as a workload.

### (5) Workload type

A workload type may indicate a type of a running form of a microservice instance, and the workload type may alternatively be considered as a workload type of the microservice instance.

In different running environments, there may be a plurality of cases for the workload type (which may also be considered as a type of a running form).

For example, the workload type may include a container, a virtual machine, and/or a function.

In addition, in the different running environments, the workload type may include subtypes of types such as the container, the virtual machine, and/or the function.

For example, Kubernetes, abbreviated as K8s, is an open-source system for automated deployment, scaling, and management of containerized applications, and is used in a cloud native running environment. A workload type of a microservice instance in Kubernetes is a container. Specifically, a workload type provided in Kubernetes may be specifically a stateful application Statefulset. In addition, a workload type provided in a third-party application OpenKruise of Kubernetes is also a container, and may be specifically AdvancedStatefulset.

It may be understood that, in an existing or subsequently developed running environment, the workload type may have a form other than the foregoing examples, and the subtypes of types such as the container, the virtual machine, and/or the function may also have other forms. For example, when a workload type is a container, a further refined workload type may include Statefulset and AdvancedStatefulset, and may further include another type. This is not limited in embodiments of this application.

### (6) Running environment

A running environment is a system environment required for software development and running. In a microservice scenario, a running environment of a microservice may be related to cloud native, a virtual cluster, serverless, and/or the like.

### (7) Cloud native

Cloud native (Cloud Native) is a software development and deployment methodology based on cloud computing, and may enable applications and services to be designed as native applications in a cloud environment, to achieve high availability, scalability, and flexibility.

In a cloud native running environment, containerization can be implemented. To be specific, cloud native uses containerization technologies to package applications and services into containers, to achieve portability and scalability of the applications.

Cloud native can use a microservice architecture to split applications and services into a plurality of small service units, thereby improving maintainability and scalability of the applications. In a cloud native scenario, a workload type of a microservice is a container.

An example of an open-source system in the cloud native scenario may be Kubernetes.

### (8) Virtual cluster

In a virtualization technology, a plurality of virtual machines may be deployed on a single physical server by virtualizing the physical server, thereby effectively improving resource utilization of the physical server. A resource pool including a plurality of physical servers on which virtual machines are deployed is referred to as a virtual cluster. In other words, the virtual cluster includes a plurality of virtual machines.

### (9) Serverless

In a serverless architecture (serverless architecture), fine-grained division may be performed on a conventional application, to divide the application into functions. Each function undertakes a part of functions of the application, and the application is converted into a combination of the functions.

Function as a service (Function as a Service, FaaS) is also referred to as "function-as-a-service", and is a representative service form of the serverless architecture. It allows developers to build, compute, run, and manage their application packages in a form of functions, without maintaining a backend infrastructure. Function as a service is an event-driven execution model that runs in stateless containers and those functions manage server-side logic and state through the use of services from a FaaS provider.

In the serverless architecture, a workload type of a microservice is a function.

### (10) Upgrade domain

When microservices are upgraded, some microservice instances within a microservice cluster are grouped based on technical restrictions or service requirements, and upgrade is performed on a per-group basis. Such a group is referred to as an upgrade domain. In an actual application scenario, a selected set of to-be-updated instances may serve as an upgrade domain.

With the vigorous development of cloud technologies, cloud application scenarios with various runtime modalities such as virtual machines, cloud native architectures, and serverless architectures have emerged. However, updating of a large quantity of applications faces great challenges in diversified application scenarios.

Currently, there may be the following conventional microservice update manners.

### 1. Manually selecting a microservice instance within a microservice cluster for update

This conventional update manner causes a slow iteration speed and requires high labor costs, and it is difficult to meet a current requirement for the iteration speed. In addition, an upgrade domain selected based on manual experience often cannot adapt to a changeable application scenario, resulting in inaccurate selection of the upgrade domain and affecting execution effect of a task.

### 2. Randomly updating a microservice instance in a microservice cluster

In an actual application scenario, although microservice instances in a same microservice cluster have the same service responsibilities, different microservice instances usually have differences in an instantaneous state. For example,
the microservice cluster includes a running microservice instance and an idle microservice instance, and interruption costs of the two microservice instances are greatly different.

The microservice cluster includes microservice instances that are deployed in a distributed manner based on a disaster recovery requirement. In other words, different microservice instances may be deployed in different regions. If all or most microservice instances in a same region are updated, a disaster recovery capability is reduced.

There is a primary/secondary difference between microservice instances in the microservice cluster. Therefore, interruption of a primary instance directly reduces a service level agreement (service level agreement, SLA) level.

It can be learned that, randomly updating the microservice instance in the microservice cluster may affect performance, stability, or a disaster recovery capability of the microservice cluster, resulting in poor service execution effect.

### 3. Updating a microservice by a third-party update tool

In an actual application scenario, each microservice usually has a common requirement for update. Therefore, using different third-party update tools for different microservices may cause a large amount of additional investment in adaptation work and the like, resulting in poor universality and limited functions.

In addition, currently, running environments of the microservice cluster are increasingly diversified, for example, there are a plurality of running environments such as a physical machine, a virtual machine, cloud native, and serverless. Therefore, the conventional microservice instance update manner has poor universality, and is difficult to adapt to update requirements in the diversified running environments, resulting in low update efficiency of the microservice instance.

Based on this, embodiments of this application provide a microservice instance update method, to update a microservice instance within a microservice cluster in a plurality of running environments. Therefore, update efficiency of the microservice cluster is high, and requirements of a plurality of application scenarios can be met. In addition, in some examples, a to-be-updated microservice instance can be dynamically selected in various application scenarios to perform automatic update. The requirements of the plurality of application scenarios can be met, and impact on execution effect of a service can be reduced or even avoided.

The method in embodiments of this application may be applied to a compute device cluster, and the compute device cluster may include one or more compute devices.

A type of any compute device is not limited herein. For example, any compute device may be a terminal device, or may be a server, a container (container), a virtual machine (virtual machine), or the like.

In an example, the compute device cluster may be configured to implement a microservice instance update system. The system is disposed in at least one data center, and the system includes a communication interface, a plug-in center, and an update component.

The at least one data center may be disposed in one or more regions, each region may include one or more data centers, and the at least one data center may include a cloud management platform and an infrastructure.

The cloud management platform is configured to manage the infrastructure that provides a cloud service. The infrastructure may include one or more servers.

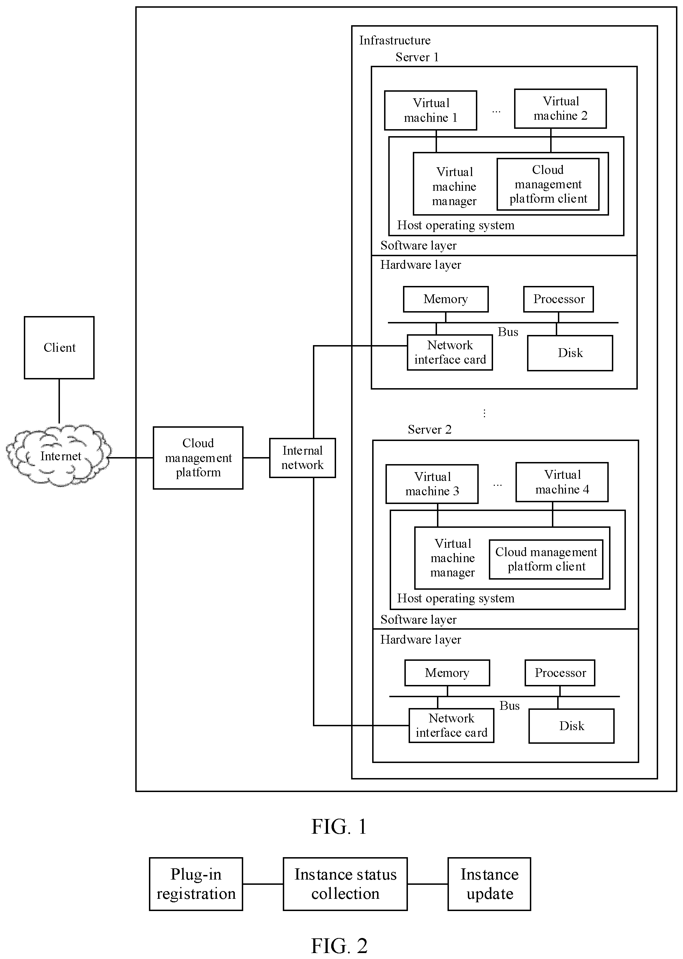

The following describes the cloud management platform and the infrastructure with reference to a diagram of an architecture shown in FIG. 1.

In FIG. 1, the cloud management platform exchanges information with the one or more servers (for example, a server 1 and a server 2 in FIG. 1) in the infrastructure through an internal network. The server includes a hardware layer and a software layer. The hardware layer includes hardware configured for the server. A PCI device may be a device like a network interface card, a graphics processing unit (graphics processing unit, GPU), or an offload card that can be inserted into a peripheral component interconnect (peripheral component interconnect, PCI) slot or a peripheral component interconnect express (peripheral component interconnect express, PCIe) slot of the server. The software layer includes an operating system installed and running on the server (where an operating system relative to a virtual machine may be referred to as a host operating system). A virtual machine manager (also referred to as hypervisor) is disposed in the host operating system. The virtual machine manager functions to implement computing virtualization, network virtualization, and storage virtualization of the virtual machine, and is responsible for managing the virtual machine. A virtual machine (virtual machine) is a complete computer system simulated by using software, has functions of a complete hardware system, and runs in a totally isolated environment. In the system architecture shown in FIG. 1, the server may be configured to run the virtual machine, and the virtual machines may have the same or different specifications. The virtual machine may also be referred to as a cloud server (elastic compute service, ECS), an elastic instance, or the like, and different cloud service providers may have different names.

In an example of embodiments of this application, the cloud management platform may be a public cloud platform. In this case, a cloud service provider, for example, an individual or a software developer that has a cloud resource development capability, may provide a cloud service for a user, and the user obtains the cloud service through an internet, but does not have cloud computing resources.

Specifically, in an example shown in FIG. 1, the cloud management platform may provide an access interface (for example, an interface or an application programming interface (application programming interface, API)). A user of the cloud platform and a cloud service provider may operate a client to remotely access the access interface to register a cloud account and a password on the cloud management platform, and log in to the cloud management platform after the cloud management platform successfully authenticates the cloud account and the password, so as to create, manage, log in to, and operate the virtual machine in a cloud data center.

In this example, some enterprises, organizations, or individuals may purchase cloud resources such as the virtual machines, so as to deploy and apply microservices by using the cloud resources to perform services. Alternatively, some enterprises, organizations, or individuals may purchase cloud services, and microservices may be deployed in the cloud services, so that users can perform services based on the microservices.

Certainly, the cloud management platform may alternatively be another type of cloud platform. This is not limited in embodiments of this application. Optionally, in this application, an instance update system may be integrated into the cloud management platform, or may be independent of the cloud management platform, to enable the user to interact with the instance update system via the cloud management platform. The cloud management platform and the instance update system may be deployed in a same data center, or may be deployed in different data centers. In another embodiment provided in this application, the cloud platform is optional, and the instance update system can run without the cloud management platform. This is not limited in this application.

The microservice instance update system may include but is not limited to the communication interface, the plug-in center, and the update component.

The following describes functions of components such as the communication interface, the plug-in center, and the update component in the microservice instance update system by using an example of the microservice instance update method in embodiments of this application. It should be noted that, the components in embodiments of this application may be considered as functional components. In an actual software system, the components may be implemented via different services or software modules, or one or more components may be integrated into a same service or software module. Actual forms of the components are not limited in embodiments of this application.

As shown in FIG. 2, the microservice instance update method in embodiments of this application may include one or more of the following processing phases:
plug-in registration, instance status collection, and instance update.

It should be noted that, steps in the processing phases may be performed in a sequence of plug-in registration, instance status collection, and instance update, or steps in some processing phases may not be performed in the foregoing sequence. This is not limited in embodiments of this application.

The following separately describes the processing phases by using an example.

### 1. Plug-in registration

In embodiments of this application, plug-in development and registration may be performed, so that plug-ins subsequently implement capabilities for updating microservice instances of different workload types in running environments.

Different plug-ins are configured to provide interfaces for updating microservice instances of different workload types.

The following describes an operation in plug-in registration with reference to a plug-in center.

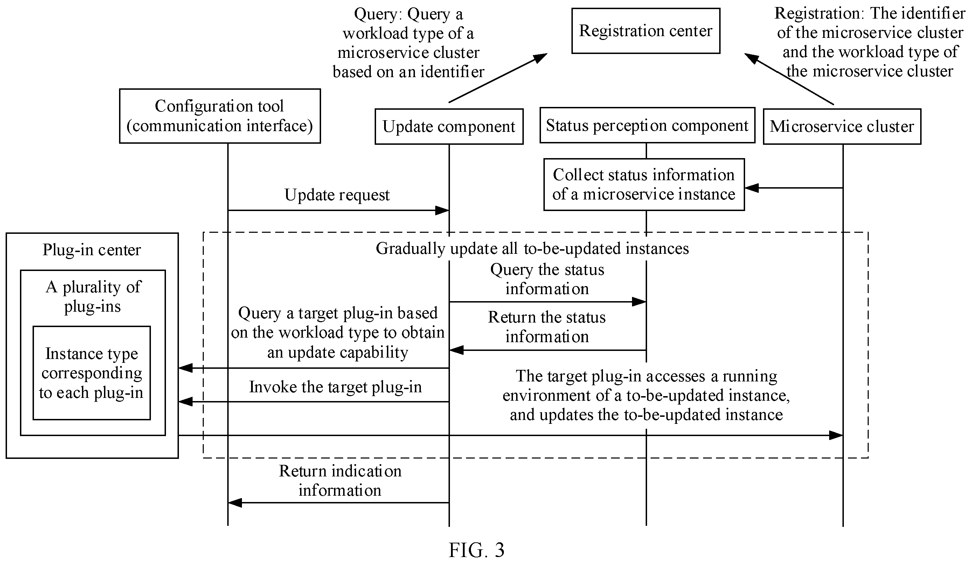

In an example of a framework shown in FIG. 3, a plug-in center may be created in a microservice instance update system. The plug-in center is configured to develop and register a plurality of plug-ins based on workload types. Different plug-ins are configured to provide interfaces for updating microservice instances of different workload types, for example, may provide interfaces for running environments of microservice instances of different workload types, to access the running environments and update the microservice instances of the corresponding workload types.

For example, if the workload types include a container-type workload Statefulset in a cloud native scenario Kubernetes, a container-type workload AdvancedStatefulset provided by a third-party application in a cloud native scenario, or a virtual machine type, a plug-in 1 corresponding to the container-type workload Statefulset may be developed, where the plug-in 1 may provide an interface for a cloud native running environment Kubernetes, to update a microservice instance of the container-type workload Statefulset; a plug-in 2 corresponding to the container-type workload AdvancedStatefulset may be developed, where the plug-in 2 may provide an interface for the third-party application in the cloud native running environment Kubernetes, to update a microservice instance of the container-type workload AdvancedStatefulset; and a plug-in 3 corresponding to the virtual machine type may be developed, where the plug-in 3 may provide an interface for a virtual cluster, to update a microservice instance of a virtual machine-type workload.

After the plurality of plug-ins are registered, a workload type corresponding to each of the plurality of plug-ins may be stored.

For example, after plug-in registration is implemented, the plug-in center may store a correspondence between a plug-in and a workload type, and the plug-in center may further transmit the correspondence between the plug-in and the workload type to a registration center.

For example, in the foregoing example, the plug-in 1 corresponds to the workload of the container type Statefulset, the plug-in 2 corresponds to the workload of the container type AdvancedStatefulset, and the plug-in 3 corresponds to the workload of the virtual machine type.

After plug-in registration is performed, the plug-in center may provide capabilities for updating the microservice instances of the different workload types in the running environments.

For a specific process in which the plug-ins in the plug-in center implement the capabilities for updating the microservice instances in the running environments, refer to related descriptions of steps 403 to 405 in the instance update phase. Details are not described herein.

### 2. Instance status collection

In embodiments of this application, after the microservice cluster is started, a status perception component may collect status information of the microservice instance in the microservice cluster.

The status information of the microservice instance may indicate an attribute status, a running status, and/or the like of the microservice instance, or may directly indicate whether the microservice instance is a to-be-updated instance.

For example, the status information of the microservice instance may include one or more of the following information:
information indicating whether the microservice instance is a primary instance or a secondary instance, information indicating a region (region) to which the microservice instance belongs, and information indicating a running status of the microservice instance.

A same region uses a same resource pool (which may be understood as sharing public services such as elastic computing, block storage, object storage, a VPC network, an elastic public IP address, and an image), which is divided by geographical location and network latency. A region may be used to describe a location of a data center. One region may include one or more data centers, and different regions include different data centers.

The following uses a status perception component shown in FIG. 3 as an example to describe an operation in instance status collection. The status perception component is configured to collect and store the status information of the microservice instance. Therefore, the status perception component may alternatively be considered as a status center or a status repository.

In embodiments of this application, under a specified condition, a status of the microservice instance may be collected and status information of each microservice instance may be recorded. Specifically, an identifier of each microservice instance and status information corresponding to the identifier may be recorded. The specified condition may have a plurality of cases. For example, the specified condition may indicate that the microservice is started, or may indicate that a specified instruction (for example, an instruction input by the user) is received.

The status perception component may obtain the status information of the microservice instance in a plurality of manners, for example, may include one or more of the following manners:
(1) Receiving status reporting: The microservice cluster actively transmits the identifier of the deployed microservice instance, the corresponding workload type, and the status information of the microservice instance in the microservice cluster to the status perception component. For example, the identifier, the corresponding workload type, and the status information may be periodically transmitted to the status perception component, and/or transmitted to the status perception component when a status change of the microservice instance is aware.
(2) Actively obtaining information: If information about a status monitoring interface is provided during workload registration of the microservice cluster, the status perception component may periodically perform status monitoring on the microservice instance via the status monitoring interface, to obtain the status information.

In this way, the status perception component may provide the status information of the microservice instance, to determine the to-be-updated instance.

For example, the status perception component may receive an identifier (for example, an ID or a uniform resource locator (uniform resource locator, URL)) of a microservice, and query and return the status information of the microservice instance of the microservice based on the identifier of the microservice.

For a specific process in which the status perception component queries the status information and determines the to-be-updated instance, refer to related descriptions of step 402 in the instance update phase. Details are not described herein.

### 3. Instance update

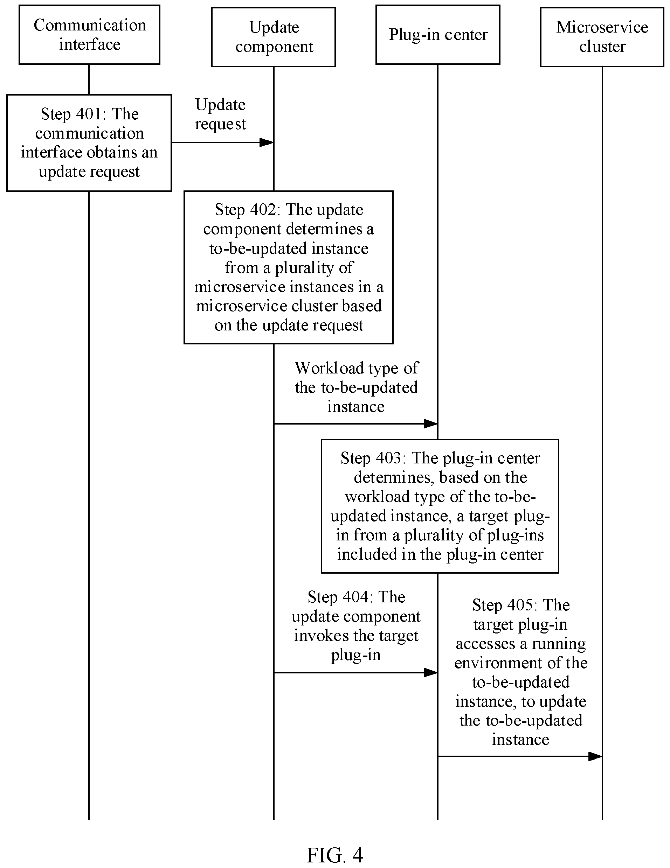

As shown in FIG. 4, in some embodiments, the microservice instance update method may include steps 401 to 405.

Step 401: The communication interface obtains an update request.

The update request indicates to update the microservice instance in the microservice cluster.

For example, the update request may be input by the user into the communication interface of the microservice instance update system via the client. For example, the compute device cluster may provide a configuration interface via a configuration tool like a browser, and the user invokes the communication interface on the configuration interface via the client to input the update request for the microservice cluster. Alternatively, the update request may be triggered by the compute device cluster based on a specified condition. For example, the update request may be triggered when the configuration tool of the compute device cluster detects information such as an update data packet of the microservice cluster.

For example, the update request may carry an identifier of the microservice cluster, for example, may carry a name, a number, or address information (for example, a namespace or a URL of the microservice cluster) of the microservice cluster.

In the example shown in FIG. 3, the configuration tool includes the communication interface. The configuration tool may receive, via the communication interface, the update request input by the user, or may generate the update request based on information input by the user (for example, the identifier of the microservice cluster and an update instruction) or the specified condition (for example, the update data packet of the microservice cluster is detected), and transmit the update request to the update component via the communication interface, to invoke the update component to perform subsequent operations.

Step 402: The update component determines the to-be-updated instance from the plurality of microservice instances in the microservice cluster based on the update request.

In embodiments of this application, after obtaining the update request, the update component may determine one or more to-be-updated instances from at least one microservice instance of a microservice in the microservice cluster. The one or more to-be-updated instances may be considered as an upgrade domain of the current microservice update.

There may be a plurality of manners of determining the to-be-updated instance.

For example, a microservice instance that does not cause a service loss when an update operation is performed may be determined from the plurality of microservice instances as the to-be-updated instance.

In addition, a microservice instance, a third-party application, or the like may mark, in a manner like a label or the like, whether the microservice instance or the third-party application can be updated currently. The compute device cluster determines, based on the label of the microservice instance, whether the microservice instance is the to-be-updated instance.

In some embodiments, step 402 specifically includes:

The update component obtains the status information of each of the plurality of microservice instances; and
the update component determines the to-be-updated instance from the plurality of microservice instances based on the status information of each microservice instance.

In embodiments of this application, the status information of the microservice instance indicates the attribute status, the running status, and/or the like of the microservice instance. Alternatively, the status information may directly indicate whether the microservice instance is the to-be-updated instance. For example, the microservice instance marks, in a form of a label or the like based on information such as a running status of the microservice instance, whether the microservice instance is the to-be-updated instance.

For example, the status information of the microservice instance may include one or more of the following information:
information indicating whether the microservice instance is a primary instance or a secondary instance, information indicating a region to which the microservice instance belongs, and information indicating a running status of the microservice instance.

For example, the status information of the microservice instance may be continuously collected by the status perception component or the like in the foregoing instance status collection and processing phase. When step 402 is performed, the update component indicates the status perception component to search, from the status information collected in the instance status collection phase, for status information, of a microservice instance in the microservice cluster, indicated by the update request, and return the status information to the update component.

For example, in the example shown in FIG. 3, after receiving the update request transmitted by the configuration tool, the update component may parse the update request to obtain specific content of the update request, for example, obtain the identifier of the to-be-updated microservice cluster; and then, query, from the status perception component, the status information of the microservice instance in the microservice cluster based on the identifier of the microservice cluster. After finding based on the identifier of the microservice, the status information of the microservice instance in the microservice cluster, the status perception component may transfer the status information of the microservice instance in the microservice cluster to the update component, so that the update component makes a decision based on the status information, and determines the to-be-updated instance.

Specific manners of determining the to-be-updated instance based on the status information may be different in different application scenarios.

The following separately describes, by using examples, the specific manners of determining the to-be-updated instance based on the status information in the different application scenarios.

### (1) Primary/Secondary scenario

In some embodiments, the plurality of microservice instances in the microservice cluster include a microservice instance serving as a primary instance and a microservice instance serving as a secondary instance, and the status information includes information indicating that the microservice instance is a primary instance or a secondary instance.

Step 402 includes:
The update component determines a plurality of to-be-updated instances and an update order of each to-be-updated instance from the plurality of microservice instances.

In the plurality of to-be-updated instances, an update order of the microservice instance serving as the secondary instance takes precedence over an update order of the microservice instance serving as the primary instance.

When there is a primary/secondary difference between microservice instances in the microservice cluster, interruption of the primary instance directly reduces an SLA level. In addition, during running, if the primary instance is frequently switched, performance of the microservice cluster is severely degraded.

Based on this, in embodiments of this application, the status information of the microservice instance can be used to record whether the microservice instance is the primary instance or the secondary instance, so that the to-be-updated instances in the microservice instances and the update order of each to-be-updated instance are properly determined, thereby avoiding frequent switching of the primary instance in a microservice instance update process.

Specifically, when the microservice instance currently serving as the primary instance is updated, the primary instance needs to be first switched from the microservice instance to another microservice instance currently serving as the secondary instance. For example, the primary instance is switched from a microservice instance A to a microservice instance B, and the microservice instance A is updated after the microservice instance A is changed to the secondary instance.

In embodiments of this application, it is considered that there is a case in which after the microservice instance A is updated, the microservice instance B is randomly selected to be updated, the primary instance needs to be switched from the microservice instance B to a microservice instance C, and the microservice instance B is updated after the microservice instance B is changed to the secondary instance. As a result, the current random update manner may cause frequent switching of the primary instance in the microservice cluster, and severely affects performance of the microservice cluster.

In embodiments of this application, the plurality of to-be-updated instances and the update order of each to-be-updated instance may be determined from the plurality of microservice instances, where in the plurality of to-be-updated instances, the update order of the microservice instance serving as the secondary instance takes precedence over the update order of the microservice instance serving as the primary instance.

It can be learned that, in embodiments of this application, when the plurality of to-be-updated instances include the microservice instance serving as the primary instance and the microservice instance serving as the secondary instance, the microservice instance serving as the secondary instance can be updated prior to the microservice instance serving as the primary instance, so that the primary instance is switched once in a process of updating all the to-be-updated instances, thereby avoiding a case in which performance of the microservice cluster is severely degraded due to frequent switching of the primary instance.

### (2) Disaster recovery scenario

In some embodiments, the status information includes information indicating a region to which the microservice instance belongs, and the plurality of microservice instances belong to a plurality of regions.

Step 402 includes:
The update component determines a plurality of to-be-updated instances from the plurality of microservice instances, where the plurality of to-be-updated instances belong to at least two regions, and a quantity of to-be-updated instances included in each region is less than a threshold.

The microservice cluster includes microservice instances that are deployed in a distributed manner based on a disaster recovery requirement. In other words, different microservice instances may be deployed in different regions. If microservice instances in a same region are updated in a centralized manner, a quantity of microservice instances that can provide services in the region is small, and a disaster recovery capability of the region is reduced.

Based on this, in embodiments of this application, the plurality of to-be-updated instances can be determined, the plurality of to-be-updated instances are not concentrated in a same region, but may be distributed in a plurality of regions, and the quantity of the to-be-updated instances included in each region is less than the threshold (the threshold can be determined based on the disaster recovery requirement), so that the to-be-updated instances are not concentrated in the same region, thereby ensuring that the microservice instances in the plurality of regions can be updated synchronously, and ensuring a disaster recovery capability of each region.

### (3) Task running scenario

In some embodiments, the status information includes information indicating a running status of the microservice instance, and the running status indicates whether the microservice instance is running.

Step 402 includes:
The update component determines, from the plurality of microservice instances, a microservice instance whose running status is an idle state as the to-be-updated instance.

The microservice cluster includes a running microservice instance and an idle microservice instance, and interruption costs of the two microservice instances are greatly different. For example, a service loss is usually caused when a microservice instance that runs a task for a long time is updated in a task execution process.

Based on this, in embodiments of this application, the running status of each microservice instance can be recorded, where the running status can indicate a task execution status of the microservice instance, for example, may indicate whether the microservice instance is running, and may further indicate a resource occupation status of the running microservice instance, and the like. A microservice instance in a state in which no service is currently lost or a service loss is small is determined as the to-be-updated instance based on the running status. In other words, a microservice instance whose running status is the idle state is determined as the to-be-updated instance. This reduces a service loss in the microservice instance update process and ensures good service execution effect.

There may be a plurality of specific manners of determining the idle state. For example, a running status of a microservice instance whose resource usage (for example, processor usage and/or memory usage) is less than a specified threshold may be determined as the idle state, or a running state of a microservice instance that is not in a task execution state may be determined as the idle state.

It should be noted that, an actual application scenario may relate to any one of the foregoing scenarios, or may relate to a combination of the foregoing plurality of scenarios. The foregoing specific manners of determining the to-be-updated instance may be independently performed, or may be combined with each other, to determine the to-be-updated instance in the actual application scenario.

Step 403: The plug-in center determines a target plug-in from the plurality of plug-ins included in the plug-in center based on a workload type of the to-be-updated instance.

Different plug-ins in the plurality of plug-ins are configured to provide interfaces for updating microservice instances of different workload types, and the target plug-in is configured to provide an interface for updating a microservice instance of the workload type of the to-be-updated instance.

After the to-be-updated instance is determined, the workload type of the to-be-updated instance may be obtained, so as to determine the target plug-in from the plurality of plug-ins. The target plug-in provides a capability for updating the microservice instance in a running environment of the microservice cluster.

In many scenarios, microservice instances within a microservice cluster have a same workload type. Therefore, a workload type corresponding to the microservice cluster may be used as the workload type of the to-be-updated instance.

For example, in the example shown in FIG. 3, in the plug-in registration phase, the identifier of the microservice cluster and the workload type corresponding to the microservice cluster may be stored in the registration center. In this case, in step 403, the update component may query, from the registration center based on the identifier of the microservice cluster, the workload type corresponding to the microservice cluster, and use the workload type corresponding to the microservice cluster as the workload type of the to-be-updated instance. In addition, the microservice instances in the microservice cluster have the same workload type in this scenario. Therefore, in some examples, for the update request, the registration center may be queried once to determine workload types of all the to-be-updated instances in the microservice cluster based on the query operation. However, in some other examples, a workload type query operation may be performed once on the registration center for each to-be-updated instance. Alternatively, the update component may directly query the plug-in center for a target plug-in corresponding to a workload type of the to-be-updated instance, and the plug-in center determines, from the plurality of plug-ins, a plug-in whose corresponding workload type matches the workload type of the to-be-updated instance as the target plug-in.

For example, in the example shown in FIG. 3, the update component may query, from the plug-in center based on the workload type of the to-be-updated instance, a plug-in corresponding to the workload type as the target plug-in. After finding the target plug-in, the plug-in center may return information about the target plug-in to the update component, so that the update component can invoke the target plug-in.

In this way, when the microservice instance needs to be updated, matching can be performed in the plurality of plug-ins based on the workload type. The plug-in center adaptively selects an appropriate plug-in to access a corresponding running environment and perform an update operation on the microservice instance.

Step 404: The update component invokes the target plug-in.

In embodiments of this application, the plug-in center or the registration center may return information such as an identifier of the target plug-in to the update component, so that the update component can invoke the target plug-in based on the information such as the identifier of the target plug-in.

As shown in FIG. 3, the update component may invoke the target plug-in from the plug-in center.

Step 405: The target plug-in accesses the running environment of the to-be-updated instance, to update the to-be-updated instance.

For example, the running environment of the microservice cluster may be cloud native, or may be a running environment like virtualization or serverless.

In embodiments of this application, because the target plug-in provides the capability for updating the microservice instance in the running environment of the microservice cluster, the target plug-in can be invoked to correspondingly access the running environment of the microservice cluster, to implement the update operation on the to-be-updated instance. The running environment of the microservice cluster is the running environment of the to-be-updated instance in the microservice cluster. The target plug-in may be invoked to implement the update operation on the to-be-updated instance in a plurality of specific manners, and the update operation may be specifically implemented based on an update manner configured in a corresponding running environment.

In the example shown in FIG. 3, after the update component invokes the target plug-in, the target plug-in may access the running environment of the to-be-updated instance, to update the to-be-updated instance in the microservice cluster.

In addition, in the example shown in FIG. 3, if the to-be-updated instance determined in step 402 is a part of to-be-updated instances in the microservice cluster, for example, to-be-updated instances whose quantity is not greater than a specified quantity can be determined only each time step 402 is performed due to a quantity limitation, the microservice cluster may still have a to-be-updated instance after step 405 is performed. The update component and the plug-in center may cyclically perform the foregoing steps 402 to 405, to traverse all the to-be-updated instances in the microservice cluster, thereby implementing update operations on all the to-be-updated instances. Certainly, in some other examples, the to-be-updated instances in step 402 includes all the to-be-updated instances in the microservice cluster, and the foregoing steps 402 to 405 may not need to be cyclically performed.

In addition, in a process of performing the foregoing steps, the update component may periodically return indication information to the configuration tool, to indicate a current update progress or the like; or may return, to the configuration tool after the microservice cluster is updated, indication information indicating that the microservice cluster is updated.

In embodiments of this application, the plurality of plug-ins provide the capabilities for updating the microservice instances in the plurality of running environments (for example, cloud native, virtualization, and serverless). Therefore, after the to-be-updated instance is determined, the target plug-in adapted to a current running environment can be dynamically determined based on the workload type of the to-be-updated instance, to update the to-be-updated instance in the microservice cluster. It can be learned that, in embodiments of this application, the method can be used to efficiently update microservice instances in different running environments. Therefore, update efficiency of the microservice cluster is improved, requirements of a plurality of application scenarios can be met, universality is high, and maintenance and management are convenient.

The following separately describes some possible specific implementations of embodiments of this application by using three example scenarios.

### 1. Microservice cluster update in a cloud native scenario

In this example scenario, a running environment of a microservice cluster is Kubernetes, and a workload type of the microservice cluster is a container type, which is specifically Statefulset.

### (1) Microservice deployment and registration

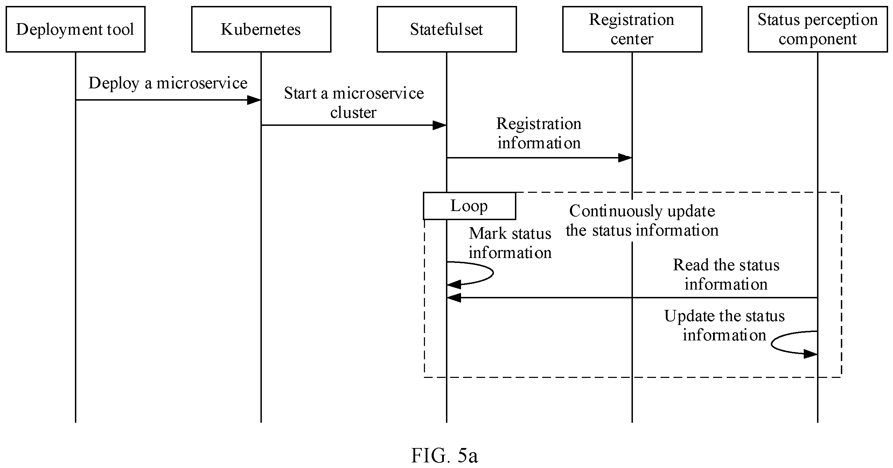

As shown in FIG. 5a, a microservice deployment and application process may include the following steps:
a. A deployment tool submits Statefulset of Kubernetes (where an update policy is set to update upon deletion) to Kubernetes, to implement microservice deployment, where the update policy provided in Statefulset is update upon deletion, to be specific, an old-version instance is deleted by deleting the to-be-updated instance, and then the deleted old-version instance is replaced with a new-version instance.
b. Kubernetes starts Statefulset based on content of YAML ("yet another markup language" ain't a markup language, YAML) that is not a markup language, to start the microservice cluster in Kubernetes.
c. A registration center obtains, through listening, that Kubernetes runs new Statefulset, obtains registration information, records an address (a namespace and an object name) of new Statefulset, and maps the workload type Statefulset to a plug-in corresponding to the workload type Statefulset in the plug-in center.
d. During running of the microservice cluster, a microservice instance periodically marks, in a form of a label, current status information. The status information may directly indicate that the microservice instance is a to-be-updated instance. For example, the status information indicates that the microservice instance is in an idle state and may be used as the to-be-updated instance, or may identify whether the microservice instance is a primary instance or a secondary instance, or may identify a region to which the microservice instance belongs.
e. A status update component listens to and reads the label of the microservice instance, and reads the status information.
f. The status update component updates a status information list of the microservice instance in the microservice cluster based on content obtained through listening.

### (2) Update of a to-be-updated instance

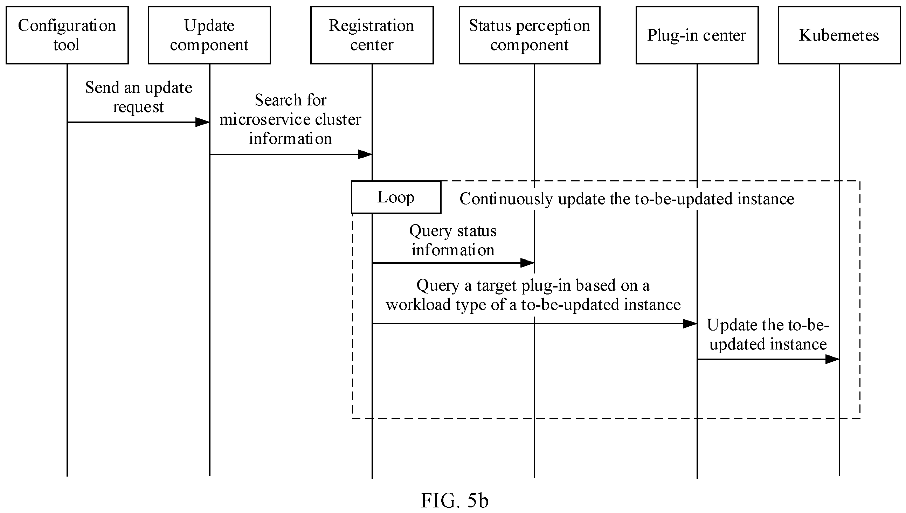

As shown in FIG. 5b, the update of the to-be-updated instance includes the following steps:
a. A configuration tool sends an update request to an update component, where the update request includes an identifier (for example, a name, a namespace, and workload information of the microservice cluster) of a microservice cluster, and the update component may serve as an upgrade controller.
b. The update component searches for an actual location of a specific microservice cluster in the registration center based on microservice cluster information.
c. The update component queries, from the status perception component, the status information of the microservice instance in the microservice cluster.
d. After determining the to-be-updated instance based on the status information, the update component may submit information about a workload type of the to-be-updated instance to a plug-in center.
e. The plug-in center returns a target plug-in. The update component accesses Kubernetes via the target plug-in and performs an update operation on the to-be-updated instance. In this example, an update function of the target plug-in is implemented according to an update policy provided in the Statefulset. Specifically, an old-version instance is deleted by deleting the to-be-updated instance, and then the deleted old-version instance is replaced with a new-version instance.

### 2. Microservice instance update by using third-party software

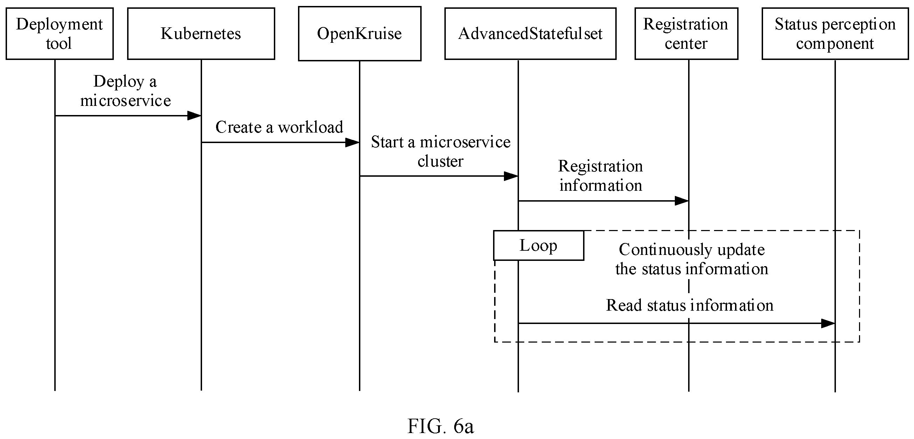

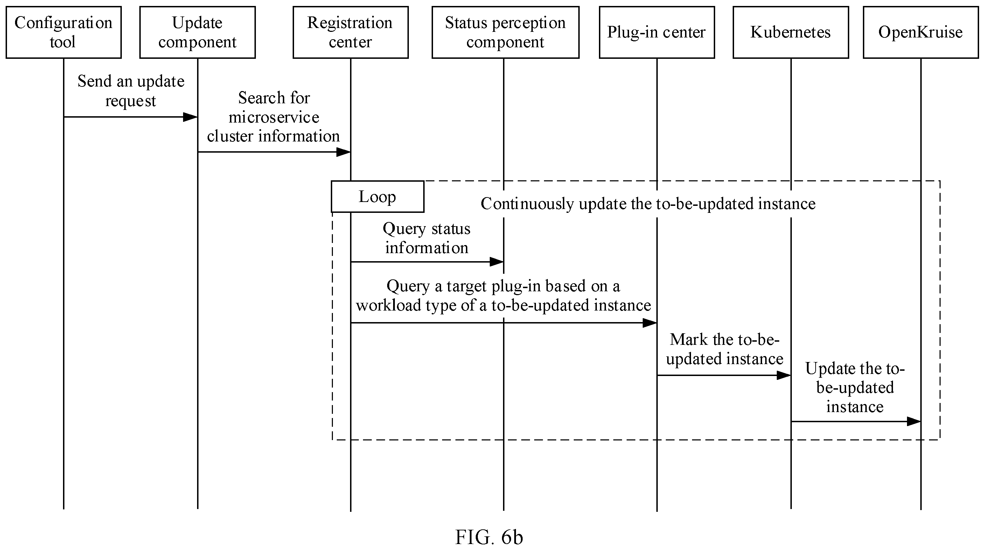

In this example scenario, a running environment of a microservice cluster is third-party software OpenKruise in Kubernetes, and a workload type of the microservice cluster is a container type, which is specifically a new workload AdvancedStatefulset provided by OpenKruise and has a new instance update capability.
(1) Microservice deployment and registration
   As shown in FIG. 6a, a microservice deployment and application process may include the following steps:
   a. A deployment tool submits YAML of a microservice to Kubernetes in which OpenKruise is deployed, for microservice deployment.
   b. After receiving a request for creating AdvancedStatefulset, Kubernetes indicates OpenKruise to start the microservice cluster.
   c. OpenKruise starts AdvancedStatefulset.
      AdvancedStatefulset actively sends registration information to A registration center, or a registration center actively performs scanning to obtain registration information.
   d. The registration center obtains, through listening, that Kubernetes runs new Statefulset, records an address (a namespace and an object name) of new Statefulset, and maps the workload type Statefulset to a plug-in corresponding to the workload type Statefulset in the plug-in center.
   e. AdvancedStatefulset continuously updates status information of a microservice instance to a status perception component based on own running status.
(2) Update of a to-be-updated instance
   As shown in FIG. 6b, the update of the to-be-updated instance includes the following steps:
   a. A configuration tool sends an update request to an update component, where the update request includes an identifier (for example, a name, a namespace, and workload information of the microservice cluster) of a microservice cluster, and the update component may serve as an upgrade controller.
   b. The update component searches for an actual location of a specific microservice cluster in the registration center based on microservice cluster information.
   c. The update component queries, from the status perception component, the status information of the microservice instance in the microservice cluster.
   d. After determining the to-be-updated instance based on the status information, the update component may submit information about a workload type of the to-be-updated instance to a plug-in center.
   e. The plug-in center returns a target plug-in. The update component accesses OpenKruise via the target plug-in, and updates a label of the microservice instance of OpenKruise and a priority definition of the label, so as to mark the to-be-updated instance by using a label.
   f. After detecting a label change of the microservice instance, OpenKruise performs an actual update operation.

### 3. Microservice cluster update in a virtualization scenario

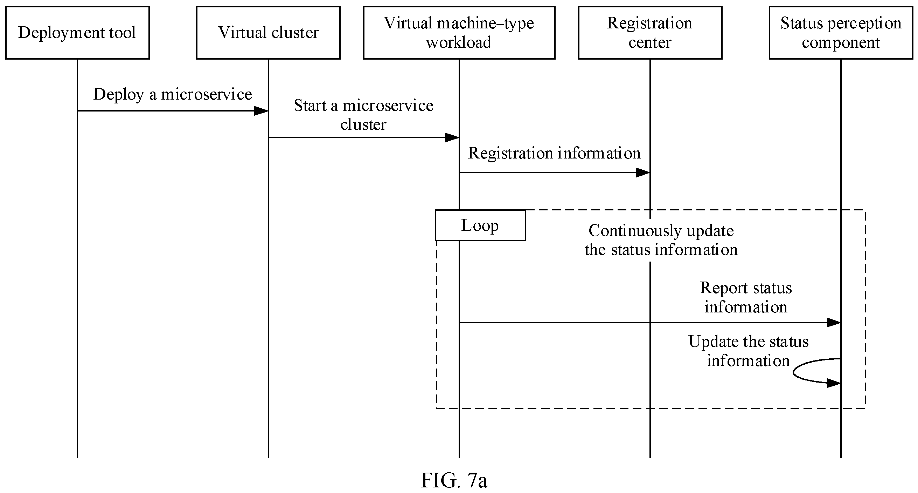

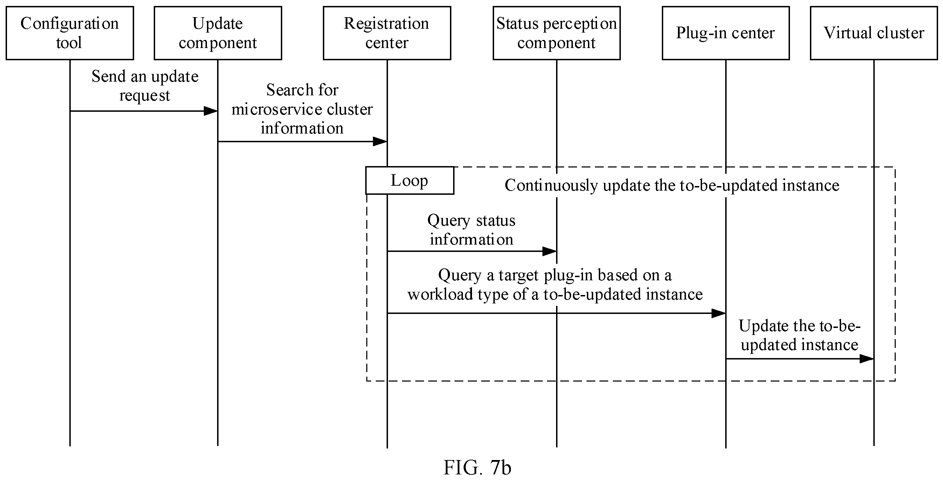

In this example scenario, a running environment of a microservice cluster is a virtual cluster, and a workload type of a microservice cluster is a virtual machine type.
(1) Microservice deployment and registration
   As shown in FIG. 7a, a microservice deployment and application process may include the following steps:
   a. A deployment tool deploys a microservice in the virtual cluster.
   b. The virtual cluster starts the microservice cluster.
   c. The virtual machine-type workload in the virtual cluster registers information with a registration center.
   d. During running of the microservice cluster, report status information of a microservice instance to a status perception component.
   e. The status perception component updates the status information of the microservice instance.
(2) Update of a to-be-updated instance
   As shown in FIG. 7b, the update of the to-be-updated instance includes the following steps:
   a. A configuration tool sends an update request to an update component.
   b. The update component searches for an actual location of a specific microservice cluster in the registration center based on microservice cluster information.
   c. The update component queries, from the status perception component, the status information of the microservice instance in the microservice cluster.
   d. After determining the to-be-updated instance based on the status information, the update component may submit information about a workload type of the to-be-updated instance to a plug-in center.
   e. The plug-in center returns a target plug-in. The update component accesses the virtual cluster via the target plug-in, and performs an update operation on the to-be-updated instance. Specifically, a new-version instance may replace an old-version instance.

The foregoing describes the microservice instance update method provided in embodiments of this application from a plurality of aspects. The following describes a microservice instance update system provided in embodiments of this application with reference to the accompanying drawings.

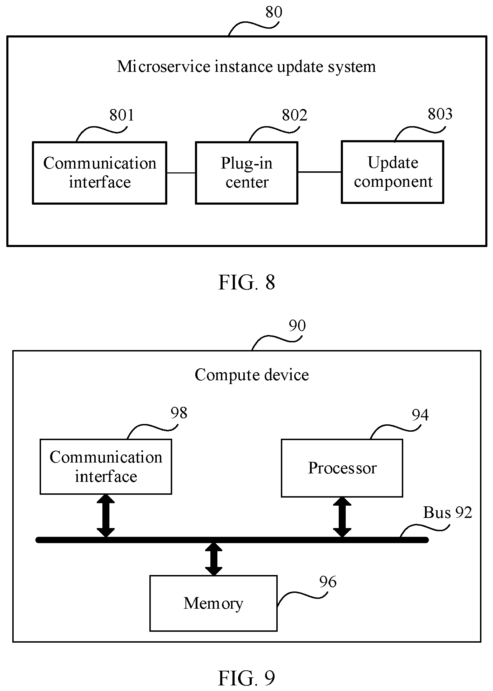

As shown in FIG. 8, an embodiment of this application provides a microservice instance update system 80. The microservice instance update system 80 includes a communication interface 801, a plug-in center 802, and an update component 803.

The communication interface 801 is configured to obtain an update request, where the update request indicates to update a microservice cluster, and the microservice cluster includes a plurality of microservice instances.

The update component 803 is configured to determine a to-be-updated instance from the plurality of microservice instances in the microservice cluster based on the update request.

The plug-in center 802 is configured to determine, based on a workload type of the to-be-updated instance, a target plug-in from a plurality of plug-ins included in the plug-in center, where different plug-ins in the plurality of plug-ins are configured to provide interfaces for updating microservice instances of different workload types, and the target plug-in is configured to provide an interface for updating a microservice instance of the workload type of the to-be-updated instance.

The update component 803 is configured to invoke the target plug-in, so that the target plug-in accesses a running environment of the to-be-updated instance, to update the to-be-updated instance.

Optionally, the workload type includes one or more of the following types: a container, a virtual machine, and a function.

Optionally, the update component 803 is configured to:
obtain status information of each of the plurality of microservice instances; and
determine the to-be-updated instance from the plurality of microservice instances based on the status information of each microservice instance.

Optionally, the plurality of microservice instances in the microservice cluster include a microservice instance serving as a primary instance and a microservice instance serving as a secondary instance, and the status information includes information indicating that the microservice instance is a primary instance or a secondary instance.

The update component 803 is configured to: determine, from the plurality of microservice instances, a plurality of to-be-updated instances and an update order of each to-be-updated instance, where in the plurality of to-be-updated instances, an update order of the microservice instance serving as the secondary instance takes precedence over an update order of the microservice instance serving as the primary instance.

Optionally, the status information includes information indicating a running status of the microservice instance, and the running status indicates whether the microservice instance is running.

The update component 803 is configured to: determine, from the plurality of microservice instances, a microservice instance whose running status is an idle state as the to-be-updated instance.

Optionally, the status information includes information indicating a region to which the microservice instance belongs, and the plurality of microservice instances belong to a plurality of regions.

The update component 803 is configured to: determine a plurality of to-be-updated instances from the plurality of microservice instances, where the plurality of to-be-updated instances belong to at least two regions, and a quantity of to-be-updated instances included in each region is less than a threshold.

In embodiments of this application, a module is used as an example of a software functional unit, and the microservice instance update system may include code running on a compute instance. The compute instance may be at least one of compute devices such as a physical host (compute device), a virtual machine, and a container. Further, there may be one or more compute devices. For example, the microservice instance update system may include code running on a plurality of hosts/virtual machines/containers. It should be noted that, the plurality of hosts/virtual machines/containers configured to run the application may be distributed in a same region, or may be distributed in different regions. The plurality of hosts/virtual machines/containers configured to run the code may be distributed in a same availability zone (availability zone, AZ), or may be distributed in different AZs. Each AZ includes one data center or a plurality of data centers with close geographical locations. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is disposed in one region. A communication gateway needs to be disposed in each VPC for communication between two VPCs in a same region and cross-region communication between VPCs in different regions. The VPCs are interconnected through the communication gateway.

The module is used as an example of a hardware functional unit, and the microservice instance update system may include at least one compute device, like a server. Alternatively, the microservice instance update system may be a device implemented by using an application-specific integrated circuit (application-specific integrated circuit, ASIC) or a programmable logic device (programmable logic device, PLD). The PLD may be a complex PLD (complex PLD, CPLD), a field programmable gate array (field programmable gate array, FPGA), generic array logic (generic array logic, GAL), or any combination thereof.

A plurality of compute devices included in the microservice instance update system may be distributed in a same region, or may be distributed in different regions. The plurality of compute devices included in the microservice instance update system may be distributed in a same AZ, or may be distributed in different AZs. Similarly, the plurality of compute devices included in the microservice instance update system may be distributed in a same VPC, or may be distributed in a plurality of VPCs. The plurality of compute devices may be any combination of compute devices such as a server, an ASIC, a PLD, a CPLD, an FPGA, and GAL.

It should be noted that, in another embodiment, the communication interface may be configured to perform any step in the microservice instance update method, the update component may be configured to perform any step in the microservice instance update method, and the plug-in center may be configured to perform any step in the microservice instance update method. Steps to be implemented by the communication interface, the update component, and the plug-in center may be specified as required. Different steps in the microservice instance update method are separately implemented by the communication interface, the update component, and the plug-in center, to implement all functions of the microservice instance update system.

Embodiments of this application further provide a compute device 90. As shown in FIG. 9, the compute device 90 includes a bus 92, a processor 94, a memory 96, and a communication interface 98. The processor 94, the memory 96, and the communication interface 98 communicate with each other through the bus 92. The compute device 90 may be a server or a terminal device. It should be understood that a quantity of processors and a quantity of memories in the compute device 90 are not limited in this application.

The bus 92 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 9, but this does not mean that there is only one bus or only one type of bus. The bus 92 may include a path for information transfer between various components (for example, the memory 96, the processor 94, and the communication interface 98) of the compute device 90.

The processor 94 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 96 may include a volatile memory (volatile memory), for example, a random access memory (random access memory, RAM). The processor 94 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 96 stores executable program code, and the processor 94 executes the executable program code to separately implement functions of the foregoing communication interface, update component, and plug-in center, to implement the microservice instance update method applied to the compute device cluster in the foregoing embodiment. In other words, the memory 96 stores instructions for performing the microservice instance update method applied to the compute device cluster in the foregoing embodiment.

The communication interface 98 uses a transceiver module, for example, but not limited to, a network interface card or a transceiver, to implement communication between the compute device 90 and another device or a communication network.

Embodiments of this application further provide a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

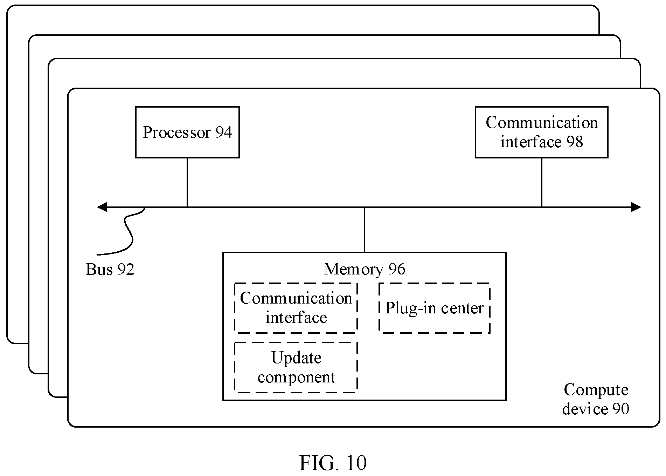

As shown in FIG. 10, the compute device cluster includes at least one compute device 90. Memories 96 in one or more compute devices 90 in the compute device cluster may store same instructions for performing the microservice instance update method.

In some possible implementations, the memories 96 in the one or more compute devices 90 in the compute device cluster may alternatively separately store some instructions for performing the microservice instance update method. In other words, a combination of the one or more compute devices 90 may jointly execute the instructions for performing the microservice instance update method.

It should be noted that, memories 96 in different compute devices 90 in the compute device cluster may store different instructions used to perform some functions of the microservice instance update method. In other words, instructions stored in the memories 96 in different compute devices 90 may implement functions of one or more modules in the communication interface, the update component, and the plug-in center.

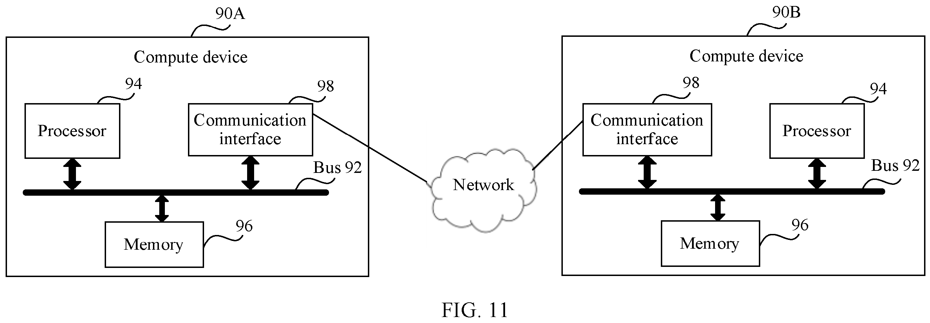

In some possible implementations, the one or more compute devices in the compute device cluster may be connected through a network. The network may be a wide area network, a local area network, or the like. FIG. 11 shows a possible implementation. As shown in FIG. 11, two compute devices 90A and 90B are connected through a network. Specifically, the compute devices are connected to the network via communication interfaces of the compute devices. In this type of possible implementation, a memory 96 in the compute device 90A may store instructions for performing functions of an update component. In addition, a memory 96 in the compute device 90B may store instructions for performing functions of a plug-in center. Alternatively, a memory 96 in the compute device 90A may store instructions for performing a part of functions of an update component. In addition, a memory 96 in the compute device 90B may store instructions for performing another part of functions of the update component.

It should be understood that, functions of the compute device 90A shown in FIG. 11 may alternatively be completed by a plurality of compute devices 90. Similarly, functions of the compute device 90B may alternatively be completed by a plurality of compute devices 90.

Embodiments of this application further provide another compute device cluster. For a connection relationship between compute devices in the compute device cluster, refer to connection manners in the compute device cluster in FIG. 10 and FIG. 11 similarly. A difference lies in that memories 96 in one or more compute devices 90 in the compute device cluster may store same instructions for performing the microservice instance update method.

In some possible implementations, the memories 96 in the one or more compute devices 90 in the compute device cluster may alternatively separately store some instructions for performing the microservice instance update method. In other words, a combination of the one or more compute devices 90 may jointly execute the instructions for performing the microservice instance update method.

It should be noted that, memories 96 in different compute devices 90 in the compute device cluster may store different instructions used to perform some functions of the microservice instance update method. In other words, instructions stored in the memories 96 in different compute devices 90 may implement functions of one or more modules in the communication interface, the update component, and the plug-in center.

Embodiments of this application further provide a computer program product including instructions. The computer program product may be software or a program product that includes instructions and that can be run on a compute device or stored in any usable medium. When the computer program product runs on at least one compute device, the at least one compute device is enabled to perform the microservice instance update method.

Embodiments of this application further provide a computer-readable storage medium. The computer-readable storage medium may be any usable medium that can be stored in a compute device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a compute device to perform the microservice instance update method.

Embodiments of this application further provide a chip system. The chip system includes a processor, and the processor is configured to implement steps performed by the foregoing compute device cluster. In a possible design, the chip system may further include a memory. The memory is configured to store necessary program instructions and data. The chip system may include a chip, or may include a chip and another discrete component.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be in electronic, mechanical, or other forms.

The units described as separate parts may or may not be physically separate, and parts displayed as units may or may not be physical units, in other words, may be located in one location, or may be distributed on a plurality of network units. Some or all of the units may be selected based on actual requirements to achieve the objectives of the solutions of embodiments.

In addition, all functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A microservice instance update method, applied to a microservice instance update system, wherein the system is disposed in at least one data center, the system comprises a communication interface, a plug-in center, and an update component, and the method comprises:
obtaining, by the communication interface, an update request, wherein the update request indicates to update a microservice cluster, and the microservice cluster comprises a plurality of microservice instances;
determining, by the update component, a to-be-updated instance from the plurality of microservice instances in the microservice cluster based on the update request;
determining, by the plug-in center based on a workload type of the to-be-updated instance, a target plug-in from a plurality of plug-ins comprised in the plug-in center, wherein different plug-ins in the plurality of plug-ins are configured to provide interfaces for updating microservice instances of different workload types, and the target plug-in is configured to provide an interface for updating a microservice instance of the workload type of the to-be-updated instance;
invoking, by the update component, the target plug-in; and
accessing, by the target plug-in, a running environment of the to-be-updated instance, to update the to-be-updated instance.

2. The method according to claim 1, wherein the workload type comprises one or more of the following types: a container, a virtual machine, and a function.

3. The method according to claim 1 or 2, wherein the system further comprises a status perception component, and determining, by the update component, the to-be-updated instance from the plurality of microservice instances in the microservice cluster based on the update request comprises:
obtaining, by the status perception component, status information of each of the plurality of microservice instances; and
determining, by the update component, the to-be-updated instance from the plurality of microservice instances based on the status information of each microservice instance.

4. The method according to claim 3, wherein the plurality of microservice instances in the microservice cluster comprise a microservice instance serving as a primary instance and a microservice instance serving as a secondary instance, and the status information comprises information indicating whether the microservice instance is a primary instance or a secondary instance; and
determining, by the update component, the to-be-updated instance from the plurality of microservice instances based on the status information of each microservice instance comprises:
determining, by the update component from the plurality of microservice instances, a plurality of to-be-updated instances and an update order of each to-be-updated instance, wherein in the plurality of to-be-updated instances, an update order of the microservice instance serving as the secondary instance takes precedence over an update order of the microservice instance serving as the primary instance.

5. The method according to claim 3 or 4, wherein the status information comprises information indicating a running status of the microservice instance, and the running status indicates whether the microservice instance is running; and
determining, by the update component, the to-be-updated instance from the plurality of microservice instances based on the status information of each microservice instance comprises:
determining, by the update component from the plurality of microservice instances, a microservice instance whose running status is an idle state as the to-be-updated instance.

6. The method according to any one of claims 3 to 5, wherein the status information comprises information indicating a region to which the microservice instance belongs, and the plurality of microservice instances belong to a plurality of regions; and
determining, by the update component, the to-be-updated instance from the plurality of microservice instances based on the status information of each microservice instance comprises:
determining, by the update component, a plurality of to-be-updated instances from the plurality of microservice instances, wherein the plurality of to-be-updated instances belong to at least two regions, and a quantity of to-be-updated instances comprised in each region is less than a threshold.

7. A microservice instance update system, wherein the system is disposed in at least one data center, and the system comprises a communication interface, a plug-in center, and an update component;
the communication interface is configured to obtain an update request, wherein the update request indicates to update a microservice cluster, and the microservice cluster comprises a plurality of microservice instances;
the update component is configured to determine a to-be-updated instance from the plurality of microservice instances in the microservice cluster based on the update request;
the plug-in center is configured to determine, based on a workload type of the to-be-updated instance, a target plug-in from a plurality of plug-ins comprised in the plug-in center, wherein different plug-ins in the plurality of plug-ins are configured to provide interfaces for updating microservice instances of different workload types, and the target plug-in is configured to provide an interface for updating a microservice instance of the workload type of the to-be-updated instance; and
the update component is configured to invoke the target plug-in, so that the target plug-in accesses a running environment of the to-be-updated instance, to update the to-be-updated instance.

8. The system according to claim 7, wherein the workload type comprises one or more of the following types: a container, a virtual machine, and a function.

9. The system according to claim 7 or 8, wherein
the update component is configured to:
obtain status information of each of the plurality of microservice instances; and
determine the to-be-updated instance from the plurality of microservice instances based on the status information of each microservice instance.

10. The system according to claim 9, wherein the plurality of microservice instances in the microservice cluster comprise a microservice instance serving as a primary instance and a microservice instance serving as a secondary instance, and the status information comprises information indicating whether the microservice instance is a primary instance or a secondary instance; and
the update component is configured to determine, from the plurality of microservice instances, a plurality of to-be-updated instances and an update order of each to-be-updated instance, wherein in the plurality of to-be-updated instances, an update order of the microservice instance serving as the secondary instance takes precedence over an update order of the microservice instance serving as the primary instance.

11. The system according to claim 9 or 10, wherein the status information comprises information indicating a running status of the microservice instance, and the running status indicates whether the microservice instance is running; and
the update component is configured to determine, from the plurality of microservice instances, a microservice instance whose running status is an idle state as the to-be-updated instance.

12. The system according to any one of claims 9 to 11, wherein the status information comprises information indicating a region to which the microservice instance belongs, and the plurality of microservice instances belong to a plurality of regions; and
the update component is configured to determine a plurality of to-be-updated instances from the plurality of microservice instances, wherein the plurality of to-be-updated instances belong to at least two regions, and a quantity of to-be-updated instances comprised in each region is less than a threshold.

13. A compute device cluster, comprising at least one compute device, wherein the at least one compute device comprises a processor and a memory; and
the processor is configured to execute instructions stored in the memory, to enable the compute device cluster to perform the method according to any one of claims 1 to 6.

14. A computer-readable storage medium, wherein the computer-readable storage medium stores a computer program, and when the computer program is run on a processor, the processor is enabled to perform the method according to any one of claims 1 to 6.

15. A computer program product comprising instructions, wherein when the instructions are executed by a processor, the method according to any one of claims 1 to 6 is implemented.
